# EUROPEAN PATENT APPLICATION

(11) **EP 3 583 843 A1**
(43) Date of publication of application: **25.12.2019**
(21) Application number: 18754411.9
(22) Date of filing: 16.02.2018
(51) Int. Cl.: A01K 63/04

(54) **AQUACULTURE SYSTEM AND PRODUCTION METHOD FOR AQUATIC ORGANISMS**

(30) Priority: 17.02.2017 JP 2017028271
(71) Applicant: Nippon Suisan Kaisha, Ltd., Minato-ku Tokyo 105-8676 (JP)
(72) Inventor: MINAMI, Hiroshi, Saiki-shi, Oita 876-1204 (JP)
(74) Representative: Winter, Brandl, Fürniss, Hübner, Röss, Kaiser, Polte - Partnerschaft mbB
(86) International application number: PCT/JP2018/005595
(87) International publication number: WO 2018/151282

(57) **Abstract**

The present invention provides an aquaculture system in which a biofloc technology is introduced so as make it possible to easily control water quality (C/N ratio) of culture water. Provided is a biofloc technology-based aquaculture system in which a culture water tank is provided with a nitrifying bacterium-immobilized material in which nitrifying bacteria are supported on a carrier. It is preferable that a water-permeable container filled with the nitrifying bacterium-immobilized material is disposed downstream of an air injector and/or an aeration apparatus.

## Description

### Technical Field

The present invention relates to a closed circulating aquaculture system for aquaculture of aquatic organisms.

### Background Art

Various types of equipment and devices have been conventionally developed for an aquaculture system for rearing fish and shellfish, and crustaceans in an aquaculture water tank constructed on land. For example, in Patent Literature 1, aquaculture equipment has been reported that includes an endless annular circulation-type water tank, a water management device that removes aquaculture water in the water tank to an outside of the water tank to adjust the aquaculture water to a predetermined condition, and then returns the adjusted aquaculture water to the water tank, an aeration water passage for aerating the treated water fed from the water management device, a flow generation device that produces a unidirectionally circulating water flow, a feeder and the like.

Meanwhile, land aquaculture systems in which biofloc technology is introduced have attracted attention, and aquaculture of shrimps has been mainly demonstrated in Southeast Asia and the like, and the introduction has been progressed in Japan (e.g., Non-patent Literature 1).

In the biofloc technology, the aquaculture water tank is supplied with carbon and nitrogen by feeding feed that is organic substances, but the carbon and nitrogen remain in the aquaculture water tank in a form of unconsumed, unused feed (residual feed) or excreta. The carbon is dissolved as carbon dioxide in water in the aquaculture water tank and the excessive carbon dioxide is released from water. However, the nitrogen is dissolved in water in a form of inorganic ammonia (NH₄) as a decomposition product of residual feed or excreta by nitrifying bacteria, and the ammonia is sequentially oxidized to nitrous acid (NO₂) and nitric acid (NO₃) by a nitrification activity of nitrifying bacteria. When organic substances are added in the aquaculture water and a carbon content in the aquaculture water is increased, a carbon/nitrogen ratio (C/N ratio) increases, and the nitrifying bacteria that form a biofloc grow by using the nitrogen as a nutrient.

### Citation List

### Patent Literature

Patent Literature 1: JP 3022030 U

### Non-patent Literature

Non-patent Literature 1: Scientific Reports of Hokkaido Fisheries Research Institutes 86, 81-102 (2014)

### Summary of the Invention

### Technical Problem

In the biofloc technology, it is possible to maintain water quality of the aquaculture water tank by controlling the C/N ratio. That is, in the biofloc technology, when the C/N ratio is low, a decomposition rate of the organic substances by the nitrifying bacteria increases, and generation amounts of the ammonia and the nitrous acid increase. Conversely, when the C/N ratio is high, the decomposition rate of the organic substances decreases, and the nitrogen is taken up by the nitrifying bacteria, and the generation amounts of the ammonia and the nitrous acid decrease.

An ideal C/N ratio exists due to the nitrifying bacteria forming a biofloc to be used, or aquatic organisms to be cultured. In general, when the C/N ratio is low, the decomposition rate of the organic substances by the nitrifying bacteria becomes fast, and the harmful ammonia and nitrous acid increase. Conversely, the higher the C/N ratio, the slower the decomposition rate of the organic substances by the nitrifying bacteria, and microorganisms form protein by using the nitrogen components as the nutrient and grow (this also increases the amount of the biofloc). Because the nitrogen component is consumed as the nutrient, generation of the ammonia and nitrous acid is suppressed.

To reliably suppress the excessive generation of the harmful ammonia and nitrous acid, the C/N ratio is set to be high. In this case, there is a problem in that the nitrifying bacteria forming the biofloc in the aquaculture water tank increase too much, resulting in an excessive amount of the biofloc itself in the aquaculture water tank. As a result, a collection frequency of the excessive biofloc needs to be increased, leading to increase in cost, and to lose an advantage of the closed circulating aquaculture system in which frequent replacement of the aquaculture water is not supposed.

Thus, in the known aquaculture equipment using the biofloc, the nitrifying bacteria included in the biofloc are used for the nitrification activity, but control of an amount of ammonia nitrogen in water by controlling the amount of the biofloc is actually difficult. In such circumstances, an object of the present invention is to provide an aquaculture system that can easily control water quality (a C/N ratio) of aquaculture water in a closed circulating aquaculture system in which biofloc technology has been introduced. Solution to Problem

As a result of extensive research to solve the problem described above, the inventor of the present invention has found that the following invention is consistent with the object described above to reach the present invention.

That is, the present invention relates to the following aquaculture system.
<1> An aquaculture system using a biofloc including an immobilizing material for nitrifying bacteria that carries nitrifying bacteria on a carrier in an aquaculture water tank.
<2> The aquaculture system according to <1>, in which the carrier in the immobilizing material for nitrifying bacteria is a foamed carrier.
<3> The aquaculture system according to <1> or <2>, in which the aquaculture water tank includes an air injector for circulating a water flow in the aquaculture water tank, and an aeration device for discharging aquaculture water and mixing it with air, and the immobilizing material for nitrifying bacteria is packed in a container having water permeability.
<4> The aquaculture system according to <3>, in which the container having the water permeability in which the immobilizing material for nitrifying bacteria is packed is disposed downstream of the air injector and/or the aeration device.
<5> The aquaculture system according to any one of <1> to <4>, in which the aquaculture water tank is provided with any one or more of a water wheel, a feeding machine, and a heat insulation material.
<6> The aquaculture system according to any one of <1> to <5>, in which the aquaculture water tank is installed on land.
   Another aspect of the present invention is an invention according to the following producing method for aquatic organisms.
<7> A producing method for aquatic organisms, the producing method using the aquaculture system according to any one of <1> to <6> described above to perform aquaculture of target aquatic organisms.
<8> The producing method for the aquatic organisms according to any one of <1> to <7>, in which the aquatic organism that is reared in the aquaculture water tank is a marine organism.
<9> The producing method for the aquatic organisms according to <8>, in which the marine organism is a crustacean.
<10> The producing method for the aquatic organisms according to <9>, in which the crustacean is the order Decapoda.
<11> The producing method for the aquatic organisms according to <10>, in which the order Decapoda is the superfamily Penaeoidea.
<12> The producing method for the aquatic organisms according to <11>, in which the superfamily Penaeoidea is the family Penaeidae.
<13> The producing method for the aquatic organisms according to <12>, in which the family Penaeidae is the genus Litopenaeus.
<14> The producing method for the aquatic organisms according to <13>, in which the genus Litopenaeus is whiteleg shrimp (the Litopenaeus vannamei).

Furthermore, another aspect of the present invention is the following invention.
<X1> An immobilizing material for nitrifying bacteria that carries nitrifying bacteria on a carrier.
<X2> The immobilizing material for nitrifying bacteria according to <X1> described above that is used for aquaculture of aquatic organisms with a biofloc.
<X3> The immobilizing material for nitrifying bacteria according to <X1> or <X2> described above, in which the carrier is a foamed carrier.

### Advantageous Effects of Invention

According to the present invention, it is possible to efficiently perform aquaculture of aquatic organisms by maintaining appropriate water quality in an aquaculture water tank in an aquaculture system using a biofloc.

### Brief Description of Drawing

FIG. 1 is a plan view illustrating an aquaculture water tank configuring an aquaculture system according to an embodiment of the present invention.
FIG. 2 is a partially omitted cross-sectional view of the aquaculture system according to the embodiment of the present invention.
FIG. 3 is a partially omitted and enlarged view of the aquaculture water tank illustrated in FIG. 1.

### Description of Embodiments

An embodiment and the like of the present invention will be described in detail below, but the present invention is not limited to the below embodiment and the like, and optional modifications may be made within a scope that does not deviate from the spirit of the present invention. Note that in the present specification, "from A to B" or "A to B" is used as expressions that include the starting and ending numerical values or physical quantities. Furthermore, in the present specification, "A and/or B" means "one or both of A and B". That is, "A and/or B" includes "A only", "B only", and "both A and B".

The aquaculture system of the present invention (hereinafter simply referred to as "the aquaculture system of the present invention") is an aquaculture system that employs a biofloc and that includes an immobilizing material for nitrifying bacteria carrying nitrifying bacteria on a carrier in an aquaculture water tank. The aquaculture system of the present invention is suitably a closed circulating aquaculture system.

The aquaculture system of the present invention is assumed to be an aquaculture system using a biofloc. In the present invention, the "biofloc" refers to a mass of microorganisms that is artificially created in water in an aquaculture water tank for aquatic organisms such as fish and shellfish, or crustaceans. This biofloc can reduce poisonous ammonia and nitrous acid that are increased by feeding and the biofloc itself can also be fed as a source of protein.

In the present specification, the "aquaculture water" is water or an aqueous solution to be used for rearing in a water tank for performing aquaculture of aquatic organisms and includes freshwater, seawater, and blackish water. Appropriate water is selected for aquatic organisms to be reared. Seawater and blackish water may be prepared using artificial seawater. Appropriate changes may be made depending on a time of rearing from spawn to a shipping size.

One feature of the aquaculture system of the present invention is that in the aquaculture water tank, as the nitrifying bacteria, the carrier carrying the nitrifying bacteria (the immobilizing material for nitrifying bacteria) is used, together with nitrifying bacteria contained in the biofloc. In this way, since ammonia nitrogen is synergistically nitrified not only by the nitrifying bacteria contained in the biofloc, but also by the nitrifying bacteria carried on the carrier, excessive increase in the biofloc due to proliferation of the nitrifying bacteria is suppressed.

Examples of the nitrifying bacteria include ammonia-oxidizing bacteria, and nitrite-oxidizing bacteria. The "ammonia-oxidizing bacteria" are bacteria that oxidize and convert ammonia nitrogen, for example ammonium ions, into nitrite ions in aquaculture water under an aerobic atmosphere, and the "nitrite-oxidizing bacteria" are bacteria that further oxidize and convert nitrite ions, produced by ammonia-oxidizing bacteria, in the aquaculture water into nitrate ions under the aerobic atmosphere.

In the present invention, examples of types of nitrifying bacteria include Nitrobacter, Nitrospina, Nitrococcus, and the like, but the types of the nitrifying bacteria are not particularly limited. Various conditions such as a type of aquatic organisms to be cultured, a hydrogen ion exponent, dissolved oxygen, nitrogen concentration, aquaculture density, a size of the aquaculture water tank (an amount of aquaculture water), temperature, and the like are considered to appropriately be selected. Also, the nitrifying bacteria contained in the biofloc and the nitrifying bacteria immobilized on the carrier may be the same or different.

The immobilizing material for nitrifying bacteria is the carrier that carries the nitrifying bacteria.

A type of the carrier is not particularly limited as long as the carrier is not inhibited from carrying the nitrifying bacteria, and there is no negative effect on an aquaculture target, and any of an inorganic carrier made of an inorganic material such as ceramic and an organic carrier made of an organic material such as resin can be used.

A shape of the carrier is not limited as long as the carrier is not inhibited from carrying the nitrifying bacteria, and examples thereof are powdery, granular, massive, plate-like, and the like. Porous carriers are suitable because more nitrifying bacteria can be carried and contactability with the aquaculture water can be enhanced.

As the inorganic porous carrier, for example, montmorillonite, zeolite, kaolin, and the like, which are silicate compounds of natural minerals, are also suitable for carrying the nitrifying bacteria, so it is expected that fixability of the nitrifying bacteria can be improved. Inorganic carriers other than silicate compounds, such as alumina, can also be used. One type of these may be used, or two or more types may be used together.

A particle size of the inorganic carrier is not particularly limited unless carrying the nitrifying bacteria is inhibited. On the other hand, excessively small particles may be sieved and removed for a purpose such as uniformity of quality.

For example, a granular carrier having a particle diameter of approximately 0.1 µm to 250 µm can be used, but the particle diameter is not limited to this.

The organic porous carrier is not limited as long as it is a structure made of a polymer that does not dissolve in water and has high affinity with respect to microorganisms, but a polyurethane foam having excellent wear resistance and a long life is exemplified as a suitable resin material. As specific examples of the organic porous carrier, a foamed carrier, a non-woven fabric carrier, a porous gel carrier, a hollow fiber membrane carrier, and the like can be used. One type of these may be used, or two or more types may be used together.

In particular, the foamed carrier is a structure having open cells, and can be suitably used as a carrier for the immobilizing material for nitrifying bacteria because a specific surface area is large and the nitrifying bacteria can be immobilized with high concentration per unit volume. Commercially available products of the foamed carrier include, for example, MICROBREATH (trade name) (available from AION Co., Ltd.), BIOTUBE (trade name) (available from JFE Engineering Corporation), APG (available from Nisshinbo Chemical Inc.), porous cellulose carriers (available from EYELA), bio frontier net (available from KANSAIKAKO Co., Ltd.), AQUACUBE (available from Sekisui Aqua Systems Co., Ltd.), and the like. The size is arbitrary, but when the foamed carrier is used in a water permeable container described below, the formed carrier larger than each of holes (mesh) of the water permeable container is selected so as not to flow out from each hole.

A method for immobilizing the nitrifying bacteria on the carrier is arbitrary, but for example, the carrier may be mixed with dispersion liquid in which the nitrifying bacteria are dispersed in water. After mixing, for example, by contacting with oxygen, the nitrifying bacteria are immobilized while growing proliferously on the carrier, and the immobilizing material for nitrifying bacteria can be obtained.

The immobilizing material for nitrifying bacteria may be disposed in contact with the aquaculture water in the aquaculture water tank. In principle, the immobilizing material for nitrifying bacteria may be dispersed in the aquaculture water tank (aquaculture water), but, in this case, it becomes difficult to collect the dispersed immobilizing material. Therefore, the embodiment in which the immobilizing material for nitrifying bacteria is encased in the water permeable container is a suitable use mode. Specifically, an example of the water permeable container includes a cage-like container having water permeability.

Here, the term "cage-like container" refers to a housing that has a substantially rectangular parallelepiped shape and in which each surface of the container is formed in a mesh shape (or a hole shape) or the like so that water can pass through the container, and is capable of filling a filling space inside the container with the immobilizing material for nitrifying bacteria.

The shape and the size of the water permeable container is appropriately selected based on a type and a size of the immobilizing material for nitrifying bacteria, a size of the aquaculture equipment, a type and the degree of growth of the aquatic products to be cultured, and the like. Additionally, a material of the container may be made of metal or plastic, and may be selected as appropriate in accordance with a condition and the like of the aquaculture equipment.

In the aquaculture water tank, the immobilizing material for nitrifying bacteria can be used in the water permeable container (e.g., the cage-like container) to facilitate collection and placement of the immobilizing material for nitrifying bacteria and to control the amount of the immobilizing material for nitrifying bacteria (i.e., the amount of the nitrifying bacteria other than the biofloc) depending on a condition of the aquaculture water (C/N ratio). In addition, by being placed in the water permeable container, the immobilizing material for nitrifying bacteria does not flow and disappear, and can be stably used.

In a case where the aquaculture water tank includes an air injector for circulating the water flow in the aquaculture water tank, and an aeration device for discharging the aquaculture water and mixing it with air in the aquaculture water tank, the immobilizing material for nitrifying bacteria placed in the water permeable container is preferably disposed downstream of the air injector and/or the aeration device in the aquaculture system of the present invention. Here, the term "downstream" is used in the sense of downstream of the water flow generated by the air injector or the aeration device.

In addition, it is possible to easily adjust nitrification activity by adjusting the number of the water permeable containers or the amount of the immobilizing material for nitrifying bacteria in each of the containers when the ability of the nitrifying bacteria (nitrification activity) is excessive. Furthermore, since the immobilizing material for nitrifying bacteria can be easily replaced, the immobilizing material for nitrifying bacteria is useful when its ability is reduced or when undesirable bacteria grow and need to be replaced.

Note that, in the present invention, both of the air injector and the aeration device spout water and air, but both of them can be distinguished in that the "air injector" is disposed in water in order to circulate the water flow inside the aquaculture water tank, and the "aeration device" is intended to discharge the aquaculture water and to mix it with air, and its discharge outlet is disposed above water. Specific examples are as described in the embodiment of the present invention described below.

By placing the immobilizing material for nitrifying bacteria encased in the water permeable container on a downstream of the air injector and the aeration device that generate the water flow, the immobilizing material for nitrifying bacteria is in a state of so-called fluidized bed and is forcibly in contact with water, and thus the nitrifying bacteria retained in the immobilizing material for nitrifying bacteria are maximally utilized.

Furthermore, even when the amount of the immobilizing material for nitrifying bacteria is the same, the nitrification activity by the nitrifying bacteria can be controlled even by the water quantity of the air injector and the aeration device, which makes it possible to more easily control the water quality (C/N ratio) of the aquaculture water.

It is also preferable that the aquaculture water tank be provided with any one or more of a water wheel, a feeding machine, and a heat insulation material. Specific examples are as described in the embodiment of the present invention described below.

A suitable aspect of the aquaculture system of the present invention is a so-called land aquaculture system in which the aquaculture water tank is installed on land.

In the aquaculture system of the present invention, aquatic organisms to be cultured include marine organisms. The marine organisms include crustaceans. The crustaceans include shrimps (particularly, the order Decapoda). The "shrimps" include, without their sizes being limited, so-called lobsters, prawns, and shrimps in food classification.

In a scholarly classification, shrimps that serve as a target of the present invention are preferably the order Decapoda, and the superfamily Penaeoidea is preferable among the order Decapoda. Among the superfamily Penaeoidea, the family Penaeidae is preferable. Organisms of the family Penaeidae include shrimps belonging to the genus of Farfantepenaeus, Fenneropenaeus, Litopenaeus, Marsupenaeus, Melicertus, Metapenaeopsis, Metapenaeus, Penaeus, Trachypenaeus, and Xiphopenaeus, for example.

Among the family Penaeidae, edible shrimps include kuruma shrimp (Marsupenaeus japonicus), minami kuruma shrimp (Melicertus canaliculatus), black tiger (Penaeus monodon), chinese white shrimp (Penaeus chinensis), green tiger shrimp (Penaeus semisulcatus), western king shrimp (Penaeus latisulcatus), indian shrimp (Fenneropenaeus indicus), sand shrimp (Metapenaeus ensis), middle shrimp (Metapenaeus intermedius), Penaeus occidentalis, blue shrimp (Penaeus stylirostris), red tail shrimp (Penaeus pencicillatus), and whiteleg shrimp (Litopenaeus vannamei), for example, but they are not limited thereto.

In particular, whiteleg shrimp (Litopenaeus vannamei) that belongs to the genus Litopenaeus in the family Penaeidae is one of the aquaculture targets of the aquaculture system of the present invention.

Moreover, shrimps include nektonic species and non-nektonic species. As nektonic species can use a water tank in three dimensions, they are suitable for production in an overcrowded state. In the aquaculture system of the present invention, both species of shrimps are able to grow, but in the overcrowded state, shrimps have many contact chances with each other, and the productivity increases. Thus, the nektonic species are preferable. Examples of nektonic species include kuruma shrimp (Marsupenaeus japonicus), black tiger (Penaeus monodon), botan shrimp (Pandalus nipponensis), Higoromo shrimp (pandalopsis coccinata), sakura shrimp (Lucensosergia lucens), pacific pink shrimp (Pandalus eous), chinese white shrimp (Penaeus chinensis), sand shrimp (Metapenaeus ensis), and whiteleg shrimp (Litopenaeus vannamei).

Also, shrimps, not having a nature of burying themselves in sand, that hardly bury themselves in sand are less submerged in sand are preferable because they can be reared with particularly high density in the aquaculture system of the present invention. The shrimps not having the nature of burying themselves in sand include whiteleg shrimp (Litopenaeus vannamei) and chinese white shrimp.

A producing method for aquatic organisms of the present invention is a method for aquaculture of target aquatic organisms by using the aforementioned aquaculture system of the present invention.

According to the producing method for aquatic organisms of the present invention, it is possible to easily control the water quality of the aquaculture water in the closed circulating aquaculture system in which the biofloc technology has been introduced, and it is possible to efficiently perform aquaculture of the target aquatic organisms. In the efficient aquaculture, in one aspect, a survival rate can be increased. In addition, in one aspect, feed efficiency can be increased. In one aspect, growth can be accelerated and an aquaculture period can be shortened.

The aquatic organisms to be cultured are as described above, and thus descriptions thereof will be omitted. When the target of the producing method for aquatic organisms is shrimps, the aquaculture target includes from fry shrimps to parent shrimps.

The "fry shrimp" referred in the present invention refers to a shrimp whose body weight is lighter than 1 g, and shrimps that are growing from spawn to the fry shrimps are not included. Moreover, the "parent shrimp" refers to a shrimp that has grown up more than the above-mentioned fry shrimp. The parent shrimp, in a case of whiteleg shrimp, for example, in general, is raised up to approximately greater than or equal to 15 g and then shipped.

The water quality is regularly checked and adjusted so as to be within an appropriate range. The water quality is controlled by the type and the amount of the immobilizing material for nitrifying bacteria to be used together with the biofloc. The shrimps are reared at a pH of 5 to 10, preferably 6 to 9, or more preferably 7 to 8. When the pH drops or rises, the pH is adjusted by adding an alkali agent or an acid or by adjusting a water exchange rate, other than the immobilizing material for nitrifying bacteria. The aquaculture is performed while water temperature is maintained at 23 to 32°C, preferably 25 to 30°C, or more preferably 27 to 29°C. The water temperature can be adjusted by heating with solar light, a heater, and the like, or by cooling with a cooler, ice, and the like.

In the following, as the embodiment of the present invention, an example of the closed circulating aquaculture system of the present invention will be described in detail with reference to the drawings, but the present invention is not limited thereto. Note that in all of the drawings, the same components are given the same reference signs, and descriptions thereof will be omitted as appropriate.

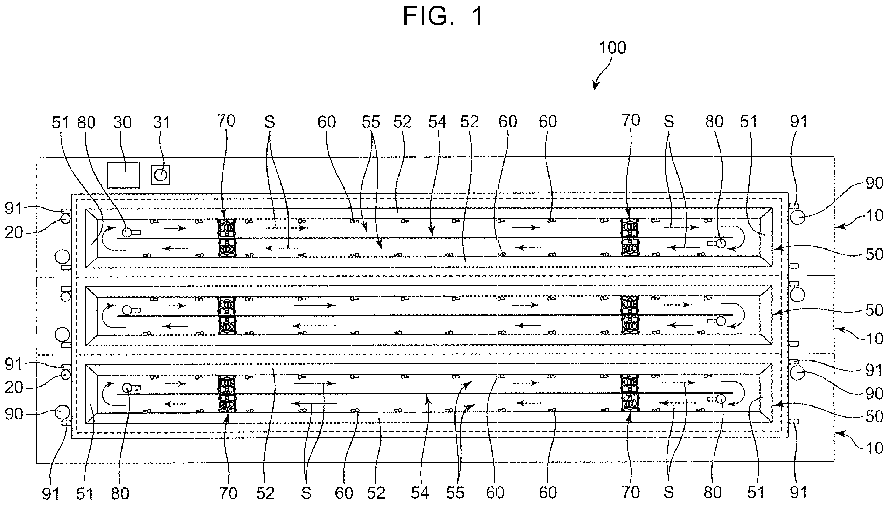

An aquaculture system 100, which is the embodiment of the present invention, will be described based on FIGS. 1 to 3.

Moreover, the aquaculture system 100 is a land aquaculture system and is suitable for performing the aquaculture of whiteleg shrimp. However, the aquaculture target is not limited thereto, and the aquatic organisms described above can be targeted.

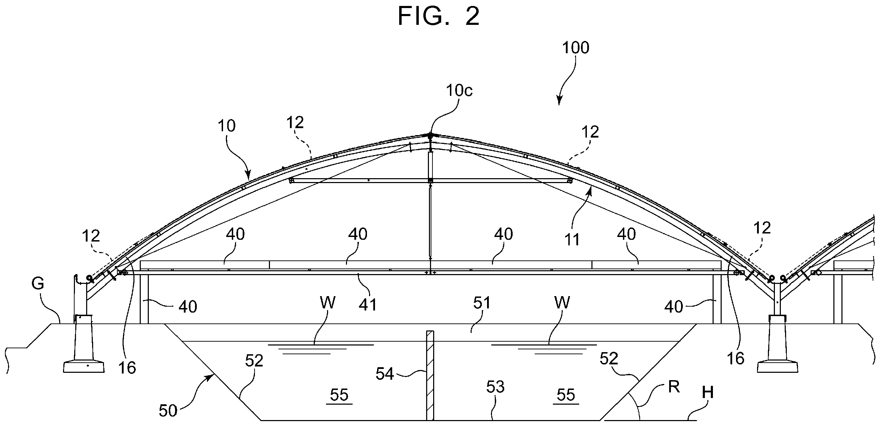

As illustrated in FIG. 1, the aquaculture system 100 of the present embodiment includes three aquaculture water tanks 50. As illustrated in FIG. 2, the aquaculture water tank 50 is formed in a thermal insulation house 10.

In the present embodiment, three aquaculture water tanks 50 are formed on a ground G of a portion covered by the thermal insulation house illustrated in FIG. 2. In the present specification, the "thermal insulation house" is a construction for maintaining temperature of an aquaculture water tank facility within a predetermined range. When the temperature outside the thermal insulation house is lower than temperature suitable for aquaculture, the temperature inside the thermal insulation house can be kept at the temperature suitable for the aquaculture by isolating the thermal insulation house from outside air.

As illustrated in FIG. 2, the thermal insulation house 10 is constructed by being covered with a synthetic resin film member 12 around a building 11 having a semicylindrical shape formed by a combination of a plurality of pipe members, angle members, and the like. Note that, although omitted in FIG. 2, in the present embodiment, the thermal insulation house 10 has three multi-span structures. Note that a size of the thermal insulation house 10, the number of multi-span structures, and the like are not limited, and thus, they can be set in accordance with an area size and circumstances of a construction site.

In the present embodiment, as illustrated in FIG. 2, an upper surface and an outer circumferential surface of the aquaculture water tank 50 are covered by a plurality of plate-like heat insulation materials 40 (for example, a foamed synthetic resin member). The plurality of heat insulation materials 40 are detachably disposed on a plurality of receiving beams 41 supported in a horizontal state by constituent members of the building 11 above the aquaculture water tank 50. The heat insulation material 40 has a heat insulation function, and also has a function of shielding light (sunlight) from outside.

When whiteleg shrimps are cultured in the aquaculture water tank 50, a temperature of aquaculture water W needs to be maintained so as to be relatively high (approximately 28°C), so water transpiration problem may arise. However, in this embodiment, the upper surface of the aquaculture water tank 50 is covered with the heat insulation materials 40, and the entire aquaculture water tank 50 is disposed inside the thermal insulation house 10. As a result, dissipation of the aquaculture water W can be suppressed. Furthermore, the heat insulation material 40 suppresses change in the water temperature of the aquaculture water W in the aquaculture water tank 50, and thus, heating and lighting costs can be reduced.

As illustrated in FIG. 1, a boiler 30 that is means for heating the aquaculture water W in the aquaculture water tank 50, and a fuel tank 31 that stores fuel for use in the boiler 30 in a vicinity of the boiler 30 are disposed. As a result, the temperature inside the thermal insulation house 10 can be increased.

In the aquaculture system 100, the boiler 30 is operated as necessary, and room temperature in the thermal insulation house 10 and the water temperature of the aquaculture water W in the aquaculture water tank 50 are appropriately maintained. Additionally, by operating an air injector 60, a water wheel 70, an aeration device 80, a circulation pump 91, and an automatic feeder 20, the aquaculture of aquatic organisms (e.g., whiteleg shrimp), and the like can be performed in the aquaculture water W in the aquaculture water tank 50.

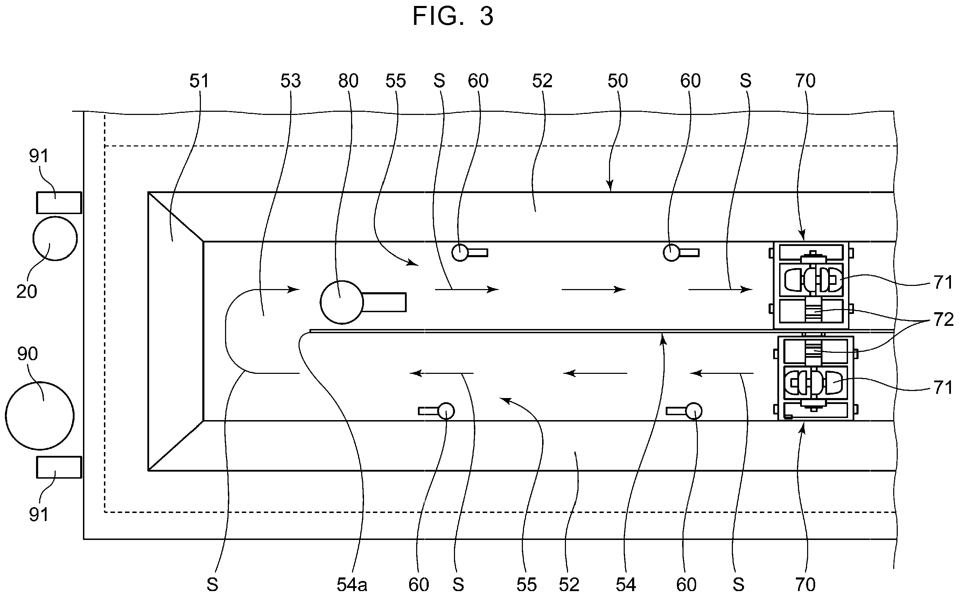

As illustrated in FIGS. 2, and 3, the aquaculture water tank 50 has a rectangular shape in a plan view, and inner wall surfaces 51 and 51 on a short side of a rectangle configuring the aquaculture water tank 50 and inner wall surfaces 52 and 52 on a long side of the rectangle are inclined so as to form a downward gradient toward an inside of the aquaculture water tank 50 (see FIG. 2).

In the aquaculture system 100 of the present embodiment, the aquaculture water tank 50 is formed with a recessed portion from the ground G in a gravitational direction, and is formed by laying a synthetic resin sheet having a water-shielding property on inner wall surfaces and a bottom surface of the recessed portion.

A bottom surface 53 of the aquaculture water tank 50 forms a rectangle in a plan view and is totally horizontal.

Note that in the present embodiment, the aquaculture system 100 is provided with the aquaculture water tank 50 by laying the synthetic resin sheet material (for example, a PE protective sheet) in the recessed portion formed on the ground G, but an aquaculture water tank made of concrete, plastic, or metal can be used instead of the aquaculture water tank 50.

As illustrated in FIG. 2, the inner wall surfaces 51 and 52 of the aquaculture water tank 50 are formed so as to form the downward gradient toward the inside of the aquaculture water tank 50, and the inner wall surfaces 51 and 52 form an obtuse angle with respect to the bottom surface 53, so a collection operation of shrimps and a recovery operation of a residue are easy. An inclination angle of the inner wall surfaces 51 and 52 of the aquaculture water tank 50 is set to approximately 45 degrees with respect to a horizontal plane H, but is not limited to this, and can be set to a large angle of approximately 60 degrees to 70 degrees when soil under the ground G is clayey.

As illustrated in FIGS. 1 to 3, in the aquaculture water tank 50, a flat plate shaped partition wall 54 in which end portions 54a are located in a horizontal portion is vertically provided in a region separated toward the inside of the aquaculture water tank 50 from the four inner wall surfaces 51, 51, 52, and 52, and thus an endless stream passage 55 capable of circulating while a water flow S of the aquaculture water W is flowing around the partition wall 54 in the horizontal direction, is formed.

A plurality of air injectors 60 is disposed along a longitudinal direction of the endless stream passage 55 on the bottom surface 53 of the aquaculture water tank 50. A pair of water wheels 70 and 70 is individually disposed on portions near the end portions of the aquaculture water tank 50 in the longitudinal direction with the partition wall 54 interposed therebetween.

In addition, the aeration device 80 is disposed near each end portion of the aquaculture water tank 50 in the longitudinal direction. Furthermore, a precipitation tank 90 and the circulation pump 91 are disposed outside each short side portion of the aquaculture water tank 50. An automatic feeder 20 and the circulation pump 91 are disposed outside one of the short side portions of the aquaculture water tank 50.

As illustrated in FIG. 1 and FIG. 3, the water wheel 70 includes rotation blades 71 that are rotatable about a horizontal axis, and a motor 72 for driving the rotation blades 71. A rotational direction of the rotation blades 71 can be switched.

As illustrated in FIG. 1 and FIG. 3, by discharging air-mixed water from the plurality of air injectors 60 provided on the bottom surface 53 of the aquaculture water tank 50, the circulating water flow S that continuously revolves around the partition wall 54 can be generated in the aquaculture water W in the aquaculture water tank 50, as indicated by arrows in each drawing, which is suitable for aquaculture of aquatic organisms having a character of swimming along the water flow S (e.g., kuruma shrimp, black tiger, botan shrimp, Higoromo shrimp, freshwater prawn, sakura shrimp, pacific pink shrimp, chinese white shrimp, sand shrimp, and whiteleg shrimp).

In the aquaculture water tank 50, oxygen in the air can be efficiently supplied to the aquaculture water W by operating the aeration device 80 and the plurality of water wheels 70. Since the rotational direction of the rotation blades 71 of the water wheel 70 is changeable, it is possible to rotate the water wheel 70 in an appropriate direction depending on circumstances such as the direction of the circulating water flow S. Note that, when the rotation blades 71 of the water wheel 70 are rotated in a forward direction, a velocity of the water flow S is not increased, but when the rotation blades 71 are rotated in a reverse direction against the water flow S, the water is pushed out, and the water flow becomes faster. This is useful when generation of the water flow S at the air injector is insufficient.

A cage-like water permeable container (not illustrated) in which a large number of the granular immobilizing materials for nitrifying bacteria are encased is disposed downstream of a water discharge outlet (not illustrated) of the aeration device 80. In the immobilizing material for nitrifying bacteria of the present embodiment, the nitrifying bacteria can be immobilized with high concentration, and a water-expandable polyurethane foam (during expansion: 10 x 10 x 10 mm), which is a foamed carrier with relatively high durability, is used as an organic carrier. However, a carrier may be used in addition to this. For example, a high inorganic porous carrier for more durability may be used.

The aeration device 80 activates the nitrifying bacteria that are aerobic bacteria, in order to discharge the aquaculture water and to mix it with air. In addition, the immobilizing material for nitrifying bacteria encased in the cage-like container flows and is forcibly in contact with water in the container, so the nitrifying bacteria retained in the immobilizing material for nitrifying bacteria can be maximally utilized. The nitrification activity by the nitrifying bacteria can be controlled by the water quantity of the aeration device, which makes it possible to more easily control the water quality (C/N ratio) of the aquaculture water.

Note that in the present embodiment, the immobilizing material for the nitrifying bacteria encased in the cage-like water permeable container is disposed downstream of the aeration device 80, but the immobilizing material for nitrifying bacteria encased in the cage-like water permeable container may be disposed in one or more air injectors 60 among the plurality of injectors 60.

Although the embodiment of the present invention has been described above, it is to be considered that the presently disclosed embodiment is illustrative in all respects and not restrictive. In particular, in the embodiment disclosed herein, the matter not explicitly disclosed, for example, running conditions and operating conditions, various parameters, and dimensions, weights, volumes, and the like of the constituents do not deviate from the scope normally implemented by a person skilled in the art, and values that can be easily conceived by one of ordinary people skilled in the art are employed.

### Industrial Applicability

The present invention can be broadly utilized in a field such as aquaculture and aquaculture fisheries industries as a closed circulating aquaculture system for rearing aquatic organisms such as shrimps on land. For example, in one aspect, the water quality of the aquaculture water can be maintained by avoiding the excessive amount of the biofloc, as ammonia nitrogen is supplementally nitrified not only by the nitrifying bacteria included in the biofloc but also by the nitrifying bacteria carried on the carrier. In one aspect, the water quality of the aquaculture water can be maintained by allowing the C/N ratio in the aquaculture water to be controlled. According to the present invention, it is possible to produce more delicious, fresher, and/or more long-life aquatic organisms.

### Reference Signs List

10 Thermal insulation house
10c Top portion
11 Building
12 Synthetic resin film member
16 Ventilation opening
20 Automatic feeder
30 Boiler
31 Fuel tank
40 Heat insulation material
41 Receiving beam
50 Aquaculture water tank
51, 52 Inner wall surface
53 Bottom surface
54 Partition wall
54a End portion
55 Endless stream passage
60 Air injector
70 Water wheel
71 Rotation blade
72 Motor
80 Aeration device
90 Precipitation tank
91 Circulation pump
100 Aquaculture system
G Ground
H Horizontal plane
S Water flow

## Claims

1. An aquaculture system using a biofloc, comprising:
an immobilizing material for nitrifying bacteria that carries nitrifying bacteria on a carrier in an aquaculture water tank.

2. The aquaculture system according to claim 1, wherein the carrier in the immobilizing material for nitrifying bacteria is a foamed carrier.

3. The aquaculture system according to claim 1 or 2, wherein the immobilizing material for nitrifying bacteria is packed in a container having water permeability.

4. The aquaculture system according to claim 3, wherein the aquaculture water tank includes an air injector for circulating a water flow in the aquaculture water tank, and an aeration device for discharging aquaculture water and mixing it with air, and
the container having the water permeability in which the immobilizing material for nitrifying bacteria is packed is disposed downstream of the air injector and/or the aeration device.

5. The aquaculture system according to any one of claims 1 to 4, wherein the aquaculture water tank is provided with any one or more among a water wheel, a feeding machine, and a heat insulation material.

6. The aquaculture system according to any one of claims 1 to 5, wherein the aquaculture water tank is installed on land.

7. A producing method for aquatic organisms, the producing method using the aquaculture system according to any one of claims 1 to 6, to perform aquaculture of target aquatic organisms.

8. The producing method for aquatic organisms according to claim 7, wherein the aquatic organism is a marine organism.

9. The producing method for aquatic organisms according to claim 8, wherein the marine product is a crustacean.

10. The producing method for aquatic organisms according to claim 9, wherein the crustacean is the order Decapoda.

11. The producing method for aquatic organisms according to claim 10, wherein the order Decapoda is the superfamily Penaeoidea.

12. The producing method for aquatic organisms according to claim 11, wherein the superfamily Penaeoidea is the family Penaeidae.

13. The producing method for aquatic organisms according to claim 12, wherein the family Penaeidae is the genus Litopenaeus.

14. The producing method for aquatic organisms according to claim 13, wherein the genus Litopenaeus is whiteleg shrimp (the Litopenaeus vannamei).
